# EUROPEAN PATENT APPLICATION

(11) **EP 1 970 149 A1**
(43) Date of publication of application: **17.09.2008**
(21) Application number: 07251025.8
(22) Date of filing: 13.03.2007
(51) Int. Cl.: B23D 61/12, B27B 33/02

(54) **A structure for double way frame-saw**

(71) Applicant: Yan's industrial Co., Ltd., Tu-Cheng, Taipei County (TW)
(72) Inventor: Yang, Liang-Chen, Tu-Cheng, Taipei County (TW)
(74) Representative: Thomson, Neil David

(57) **Abstract**

This invention relates to a double way frame-saw structure (1) comprising:
frame-saws made out of a metallic thin piece body (1) having symmetrical gradually constricting parts (10) on both sides of it;
two positioning holes (11) installed on locations of the said two constricting parts (10) so that said frame-saws (1) can be combined and fixed together said frame-saws being assembled as multiple blades to form the double way frame-saw structure;
said frame-saws being made up of continuous saw teeth (12) and scrap-guiding slots (13) that are installed along one of their side; whereby
each saw tooth (12) includes double way blade corners (121) which are installed in the corresponding front and back side.
Such a double way frame-saw structure can be shaped by use of a grinding or welding method.

## Description

### Background of the Invention

### 1. Field of the Invention

This invention relates to an improvement on frame-saw, it more specifically relates to the installation of a blade made up of continuous sawtooth along one side of the frame-saw, moreover, each sawtooth includes double way blade corners installed both in the front and in the back side so that when reciprocating sawing actions are performed, both upward and downward actions can have cutting function and the working efficiency of the sawing action can thus be improved.

### 2. Description of the Prior Art

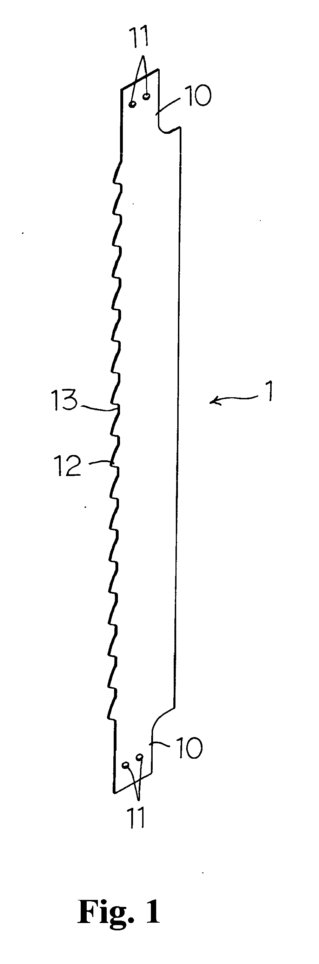

For the conventional single way frame-saw structure, as shown in figure 1, the frame-saw (1) is a metallic thin piece body having gradually constricting and symmetrical part (10) on both sides of it, wherein two positioning hole (11) are installed above the constricting part (10) so that the frame-saw (1) and related equipments can be combined and fixed together, furthermore, a blade made up of multiple continuous sawteeth (12), scrap-guiding slots (13) along one side of the frame-saw (1), all the tips of the sawteeth (12) are single and head toward the same direction, that means the frame-saw (1) has sawing function in only one direction during the sawing operation but not in another direction, relatively, when larger object is sawed, the number of reciprocating actions of the frame-saw (1) will be increased and the cutting time will be lengthened, in the mean time, the wear of the sawteeth (12) will also be increased too which might lead to its lifetime of use being affected, therefore, further improvement is thus necessary.

### Summary of the Invention

The main purpose of the current invention is to provide an improvement based on double way frame-saw strucutre, through the installation of double way blade corner having sawing function on the continuous sawteeth, both upward and downward actions thus have sawing funcitons during the reciprocating cutting operation, and the working efficiency can thus be enhanced.

Therefore, a double way frame-saw is designed in the current invention, the frame-saw is a metallic thin piece body, a gradually constricting and symmetrical parts are formed on both sides, wherein two positioning holes are installed above the two constricting parts so that the frame-saw and related equipments can be combined and fixed together, moreover, multiple blades made up of continuous sawteeth and scrap-guiding slots are installed along one side of the frame-saw, especially double way blade corner is installed at both the front side and back side of each sawtooth, the double way blade corner can be shaped using grinding or welding method.

In order to let your esteemed examiner have in-depth and better understanding on the purpose, feature and function of the current invention, a better embodiment accompanied with the drawing is presented for description.

### Brief Description of the Drawings

Figure 1 is the appearance drawing of prior art frame-saw.
Figure 2 is the entire appearance drawing of the double way frame-saw of the current invention before forming.
Figure 3 is the partial structural drawing of the double way frame-saw of the current invention before forming.
Figure 4 is the partial structural drawing of the double way frame-saw of the current invention after forming.
Figure 5 illustrates the cutting actions of the double way frame-saw of the current invention after forming.

### Detailed Description of the Preferred Embodiment

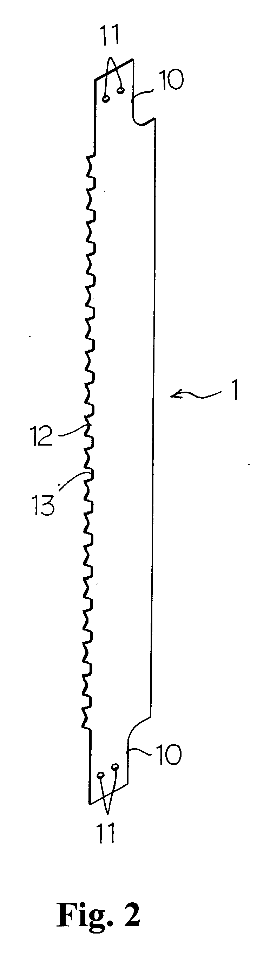

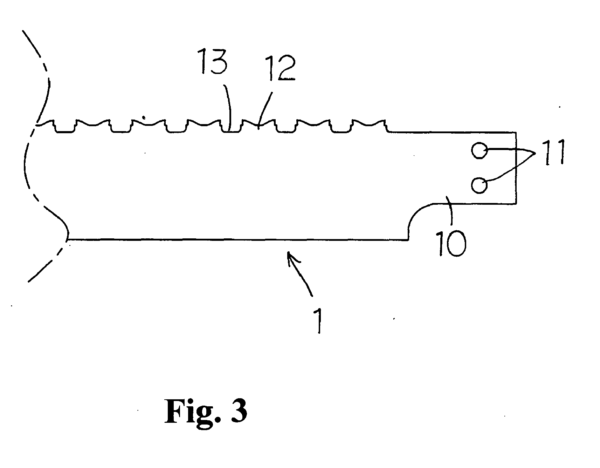

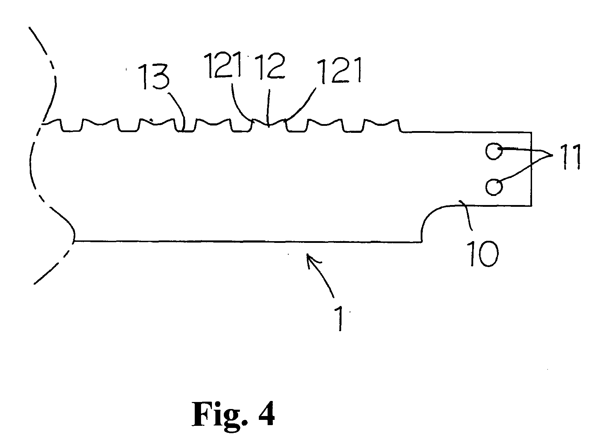

Please also refer to figure 2, 3 for the double way frame-saw structure of the current invention, wherein the frame-saw (1), as disclosed in the figure, is a metallic long and thin piece body, gradually constricting and symmetrical constricting parts (10) are formed on both sides of the frame-saw (1), meanwhile, two positioning holes (11) are installed above the two constricting parts (10) so that the frame-saw (1) and related equipments can be combined and fixed together, moreover, multiple blades made up of continuous sawteeth (12) and scrap-guiding slots (13) are intstalled along one side of the frame-saw, especially double way blade corner (121) is installed at both the front side and back side of each sawtooth (12), the double way blade corner (121) can be shaped as in figure 4 so that the frame-saw (1) can possess the same cutting function when it performs upward and downward operations and the cutting speed can thus be enhanced.

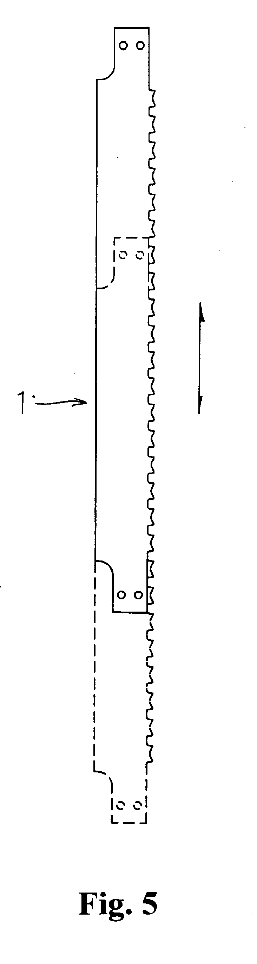

During the embodiment of the above-mentioned double way frame-saw, the frame-saw (1) is vertically assembled onto the cutting equipment, it is as shown in figure 5 when in use, the frame-saw (1) is first activated for both upward and downward reciprocating operations, the two way sawteeth (12) of the two way blade corners (121) installed both in the front and back side are used for both upward and downward operations of the frame-saw (1) during the cutting actions, therefore, the entire cutting speed and the working efficiency can be enhanced.

Besides, the front and back side double way blade corner (121) included in the continuous sawteeth of the above-mentioned frame-saw (1) of the current invention, in addition to being made in one body and being shaped by grinding and further processing method, another way is to use tungsten steel for the double way blade corner (121) and to use stainless steel for continuous sawteeth (12) separately, then a later welding process is used combine them together.

To summarize, we know that the "improvement for double way frame-saw structure" of the current invention can not be found in the market or no related technological information is available in public, its novelty is thus undeniable, moreover, its specially made double way blade can achieve the expected enhancement of working efficiency, this also meets another utility requirement of patentability, therefore, we present this application.

## Claims

1. An improvement for a double way frame-saw structure, the frame-saw is a metallic thin piece body having gradually constricting and symmetrical constricting parts on both sides of it, moreover, two positioning holes are installed on appropriate locations of the above the two constricting parts so that the frame-saw and related equipments can be combined and fixed together, furthermore, multiple blades made up of continuous sawteeth and scrap-guiding slots are installed along one side of the frame-saw, their features are: each sawtooth includes double way blade corner which is installed in the corresponding front and back side.

2. The improvement for a double way frame-saw structure of claim 1 wherein the double way blade corner installed on each sawtooth can be grinded and processed in one body or welded.
